# EUROPÄISCHE PATENTSCHRIFT

(11) **EP 1 040 348 B1**
(45) Veröffentlichungstag und Bekanntmachung des Hinweises auf die Patenterteilung: **16.11.2005**
(21) Anmeldenummer: 98966333.1
(22) Anmeldetag: 15.12.1998
(51) Int. Cl.: G01N 31/10, G01N 25/22

(54) **VERFAHREN ZUR KOMBINATORISCHEN MATERIALENTWICKLUNG DURCH DEN EINSATZ VON WÄRMEDIFFERENZBILDERN**
METHOD FOR COMBINATORIAL MATERIAL DEVELOPMENT USING DIFFERENTIAL THERMAL IMAGES
PROCEDE POUR LA MISE AU POINT COMBINATOIRE DE MATERIAUX A L'AIDE D'IMAGES THERMIQUES DIFFERENTIELLES

(30) Priorität: 23.12.1997 DE 19757754; 12.06.1998 DE 19826303
(43) Veröffentlichungstag der Anmeldung: 04.10.2000
(73) Patentinhaber: HTE Aktiengesellschaft The High Throughput Experimentation Company, 69123 Heidelberg (DE)
(72) Erfinder: MAIER, Wilhelm, Friedrich, D-45470 Mülheim (DE); HOLZWARTH, Arnold, D-45470 Mülheim (DE)
(74) Vertreter: Ricker, Mathias
(86) Internationale Anmeldenummer: PCT/EP1998/008214
(87) Internationale Veröffentlichungsnummer: WO 1999/034206

(56) Entgegenhaltungen:
- WO-A-96/11878
- WO-A-97/32208
- WO-A-98/03521
- MOATES F C ET AL: "INFRARED THERMOGRAPHIC SCREENING OF COMBINATORIAL LIBRARIES OF HETEROGENEOUS CATALYSTS" INDUSTRIAL & ENGINEERING CHEMISTRY RESEARCH, Bd. 35, Nr. 12, 1996, Seiten 4801-4803, XP002046208 in der Anmeldung erwähnt

## Beschreibung

Die Erfindung betrifft ein Verfahren zur vergleichenden Bestimmung von Eigenschaften der Materialien einer kombinatorischen Bibliothek mit Hilfe einer Infrarotkamera, mit der in Form eines Differenzbildes die Wärmetönung chemischer oder physikalischer Prozesse registriert wird. In der Anmeldung DE 19971057754 vom 23. 12. 97 sind die wesentlichen Merkmale der Erfindung bereits beschrieben. Die vorliegende Anmeldung enthält eine Erweiterung des Verfahrens durch den Einsatz selektiver IR-Filter, seine Verwendung zur allgemeinen Charakterisierung von Materialeigenschaften, seine Verwendung für homogene Katalysatoren sowie eine verbesserte Ausführungsform mit Bibliotheksplatten niedriger IR-Reflektivität, wie z.B. Schieferplatten.

### Stand der Technik

Der größte Engpaß in der Entwicklung neuer Materialien ist die Entdeckung geeigneter neuer Leitstrukturen. Dies gilt insbesondere für neue Katalysatoren. Trotz der weitverbreiteten Anwendung von heterogenen und homogenen Katalysatoren in der chemischen Technik und diesbezüglicher umfangreicher Forschungsbemühungen ist der detaillierte Mechanismus der Wirkungsweise heterogener und homogener Katalysatoren unter technischen Reaktionsbedingungen nicht ausreichend bekannt. Man ist deshalb auf empirische Verfahren angewiesen, um für jede Anwendung die richtigen Katalysatormaterialen auszuwählen und Reaktionsbedingungen zu finden, unter denen eine gewünschte katalytische Aktivität und Selektivität auftritt. Klassische Testverfahren für Katalysatoren erfordern, daß jedes in Frage kommende Katalysatormaterial einzeln unter Reaktionsbedingungen getestet wird, was angesichts der unübersehbaren Fülle in Frage kommender Materialien eine sehr kostspielige und zugleich zeitraubende Verfahrensweise darstellt. Einen vielversprechenden Ausweg bietet hier das Gebiet der kombinatorischen Materialwissenschaften, um für technisch interessante Reaktionen eine sinnvolle Vorauswahl von heterogenen oder homogenen Katalysatormaterialien zu treffen und das Testverfahren auf wenige aussichtsreiche Materialien zu beschränken. Während heterogene Katalysatoren vorwiegend für die Produktion von Massenprodukten und Feinchemikalien bedeutend sind, dominieren homogene Katalysatoren in der Produktion von enantiomerenreinen Wirkstoffen im Pharmabereich und in der taktizitätskontrollierten Polymerisation.

Bei den als kombinatorische Methoden bezeichneten Verfahren wird auf einem Träger auf engstem Raum eine große Anzahl von Proben angebracht. An Hand leicht zugänglicher physikalischer Meßgrößen, die im Zusammenhang mit der erwünschten Eigenschaft des Materials stehen, wird dann an jeder Probe ein schneller und zuverlässiger Test auf diese gewünschte Eigenschaft durchgeführt.

Auf diese Weise wurden bereits neue magnetoresistente Materialien [B. Gabriel, H. Chang, X. Sun, P. G. Schultz, X.-D. Xiang, "A Class of Cobalt Oxide Magnetoresistance Materials Discovered with Combinatorial Synthesis", Science, 270, 273-275, **1995**], neue supraleitende Materialien [X.-D. Xiang, X. Sun, G. Briceno, Y. Lou, K.-A. Wang, H. Chang, W. G. Wallace-Freedman, S.-W. Chen, P. G. Schultz, "A combinatorial Approach to Materials Discovery", Science, 268, 1738-1740, **1995**] und neue lumineszente Materialien [X.-D. Sun, K-A. Wang, Y. Yoo, W. G. Wallace-Freedman, C. Gao, X.-D. Xiang, P. G. Schultz, "Solution-Phase Synthesis of Luminescent Materials Libraries", Adv. Mater. 9, 1046-1049, **1997**] entdeckt.

Auch auf dem Gebiet der kombinatorischen Chemie heterogener Katalysatoren gibt es bereits entsprechende Veröffentlichungen [F. C. Moates, M. Somani, J. Annamalai, J. T. Richardson, D. Luss, R. C. Willson, "Infrared Thermographic Screening of Combinatorial Libraries of Heterogeneous Catalysts", Ind. Eng. Chem. Res. 35, 4801-4803, **1996**; R. C. Willson, "Catalyst Testing Process and Apparatus" US-Patent: PCT/US97/02756 Internationales Patent: WO 97/32208]. Die Autoren beschreiben ein Experiment, bei dem mit Hilfe einer Infrarot-Kamera katalytische Aktivität anhand der dabei auftretenden Wärmetönung detektiert wird. Die Detektionsempfindlichkeit des von den Autoren beschriebenen Aufbaus war allerdings relativ gering, so daß nur die extrem exotherme Knallgasreaktion (14 kJ/g) detektiert wurde. Es handelt sich hierbei nicht um eine Reaktion von technischer Bedeutung. Um effektiv Katalysatoren für technisch wichtige Reaktionen zu untersuchen, ist vor allem eine höhere Detektionsempfindlichkeit des Meßaufbaus nötig, und es muß der Nachweis geführt werden, daß die Registrierung von Reaktionswärmen bei niedrigeren Temperaturen, unterschiedlichen Reaktionen und mit winzigsten Katalysatormengen möglich ist. Die Erkennung katalytischer Aktivität von polymergebunden Katalysatoren in Lösung wurde an kodierten Kügelchen (0,5 mm) demonstriert [S.J. Taylor, J.P. Morken, Science 280 (1998) 268]. Hierbei muß die Dichte der Lösung größer sein als die Dichte der Kügelchen, da diese nur auf der Oberfläche schwimmend beobachtbar sind. Von Nachteil ist hier die aufwendige Kodierungstechnik, die Notwendigkeit der Verwendung eines Lösungsmittels höherer Dichte als die der schwimmenden Feststoffkatalysatoren. Hinzu kommt die Problematik der Verwendung unkorrigierter IR-Bilder, die darin besteht, daß aufgrund der unterschiedlichen Emissionseigenschaften hoch empfindliche IR-Kameras die Anwesenheit unterschiedlicher Materialien auf einer Oberfläche anzeigen, ohne daß Reaktionen ablaufen, wodurch die praktische Anwendarkeit dieser Methoden stark eingeschränkt ist.

Die zuverlässige Herstellung von Katalysatorbibliotheken ist ein weiterer wichtiger Aspekt. Bekannt sind kombinatorische Bibliotheken, die sich zwar weitgehend auf den Bereich der pharmazeutischen Anwendung beschränken, sich aber zum Teil auch auf die Herstellung von Bibliotheken für die Entwicklung neuer Materialien übertragen lassen (B. Posner et. al, Trends in Biochemical Science 19 (1994) 145). Die wohl zuverlässigste und breit einsetzbare Methode zur Herstellung kombinatorischer Biliotheken von Materialien ist die Kombination von Ink-Jet-Druckertechnologie mit Computersteuerung, welche erlaubt, die neuen Materialien punktweise durch Mischung von Lösungen im Nanoliterberich zu erzeugen und durch gezielte Nachbehandlung in die zu untersuchenden Feststoffe umzuwandeln [X.-D. Sun, K-A. Wang, Y. Yoo, W. G. Wallace-Freedman, C. Gao, X.-D. Xiang, P. G. Schultz, "Solution-Phase Synthesis of Luminescent Materials Libraries", Adv. Mater. 9, 1046-1049, **1997**]. Das Problem ist hier jedoch der Einsatz geeigneter Synthesebedingungen, die es erlauben, mit diesen vermischten Nanoliterlösungen auch definierte Katalysator- und andere Materialien zu erzeugen.

### Beschreibung der Erfindung:

Wir haben nun gefunden, daß kleinste Wärmetönungen beim Ablauf chemischer oder physikalischer Prozesse ortsaufgelöst mit einer Infrarot-Kamera zuverlässig sichtbar gemacht werden können, wenn ein Differenzwärmebild registriert wird, das sich aus der Subtraktion der vor Reaktionsbeginn registrierten IR-Emissionsintensitäten von den unter Reaktionsbedingungen erhaltenen Intensitäten ergibt. Als chemische oder physikalische Prozesse mit Wärmetönung eignen sich chemische Reaktionen. Phasenumwandlungen, Stoffumwandlungen, Sorptionsprozesse (Physisorption, Chemisorption, Adsorption, Desorption), Absorptionsprozesse (Absorption von Molekülen oder elektromagnetischer Strahlung), magnetische Induktion. So kann die Wärmetönung der Physisorption von Molekülen aus der Gasphase zur Erkennung von Porosität in Materialien genutzt werden. Die Wärmetönung katalysierter Reaktionen dient der Erkennung katalytischer Aktivität von Materialien. Die Wärmetönung von Phasenumwandlungen dient zur Erkennung von Stoffänderungen. Die Wärmetönung verbunden mit Oberflächenreaktionen, wie der Bildung von Carbiden oder Nitriden durch Reaktionen von Legierungen oder Mischoxiden mit Methan oder Ammoniak dient der Erkennung von Stoffumwandlungen. Die Wärmetönung verbunden mit Chemisorption dient der Erkennung von Oberflächenreaktivität, wie z.B. sauren oder basischen Zentren. Die Wärmetönung verbunden mit der Absorption elektromagnetischer Strahlung charakterisiert besondere Absorptioneigenschaften, wie UV-Absorption, Röntgenabsorption, oder Absorption sichbaren Lichtes. Erwärmung durch Anlegen eines Magnetfeldes erkennt magnetische Eigenschaften. Alle diese Eigenschaften sind von besonderem Interesse, wenn spezifische Materialien sich von der Masse anderer Materialien signifikant unterscheiden und damit potentielle neue Leitstrukturen repräsentieren.

Insbesondere ist das Verfahren interessant für die Entwicklung neuer Katalysatoren auf der Basis kombinatorischer Bibliotheken. Als Verfahren zur Herstellung von kombinatorischen Katalysatorbibliotheken mit heterogenen Katalysatoren eignet sich überraschenderweise das Sol-Gel-Verfahren, wie es zum Teil in DE-A 19545042 beschrieben wurde. Wir haben darüber hinaus gefunden, daß auch die Reaktionswärmen homogen katalysierter Reaktionen mit dieser Technik zuverlässig sichtbar gemacht werden können. Die Verwendung von Wärmedifferenzbildern erlauben auch eine Temperatur-Kalibrierung und damit eine zuverlässige Zuordnung der tatsächlichen Temperaturerhöhung am aktiven Katalysator. Dies ist für die Bewertung relativer Aktivitäten und Quantifizierungen der katalytischen Aktivitäten von großer Bedeutung.

Bevorzugt werden die katalytischen Reaktionen unter genau kontrollierten Bedingungen in einem hermetisch verschlossenen Reaktor durchgeführt, der mit einem IR-durchlässigen Fenster versehen ist, um das Registrieren mit der Kamera zu ermöglichen.

Katalysatorbibliotheken, bestehend aus Katalysatorkomponenten in Form von Metalloxiden und/oder Metallmischoxiden, werden hergestellt, indem zunächst die Vorstufen der zu untersuchenden Katalysatorkomponenten als wässerige oder alkoholische Lösung von Silizium- oder Metallverbindungen in Form ihrer Alkoxyderivate, gemischten Alkoxyderivate, ihrer Alkoxyoxo- oder Acetylacetonatderivate oder in Form ihrer Halogenide, Nitrate, Citrate oder andere Carboxylate über die Fläche einer Platte, die z. B. aus Schiefer, Metall oder Stahl, Glas, Keramik oder Kunststoff besteht, verteilt angeordnet werden, z. B. in durch Bohrungen in der Platte entstandenen Mulden. Bei den Katalysatorkomponenten kann es sich insbesondere um Carbide, Nitride und Zeolithe handeln. Die Bibliotheksplatten werden anschließend getrocknet und kalziniert. Bei der Herstellung der Katalysatorbibliothek kann es aufgrund der Oberflächeneigenschaften der Bibliotheksplatte dazu kommen, daß das Sol aus den Bohrungen auf die Oberfläche der Bibliotheksplatte kriecht. Dies kann verhindert werden, wenn die Bibliotheksplatte an den nicht mit Katalysatoren belegten Stellen mit einem nichtbenetzenden, IR-transparenten Film beschichtet ist, beispielsweise, wenn die Beschichtung vor Anbringung der Bohrungen vorgenommen wird.

Nicht nur feste Körper, sondern auch gasförmige Moleküle emittieren Infrarotstrahlung. Die Intensität dieser thermischen Emission nimmt mit der Temperatur zu. Insbesondere durch Reflexionen dieser emittierten Strahlung an Reaktorwänden und an der Oberfläche der Katalysatorbibliothek können inhomogene Temperaturerhöhungen vorgetäuscht werden. Reflexionen an der Katalysatorbiliothek sind hierbei besonders unangenehm, da sie direkt von der IR-Kamera eingefangen werden. Aus diesem Grunde sind die Strahlungseigenschaften des Trägermaterials der Katalysatorbibliothek von entscheidender Bedeutung. Ein Material mit besonders geringer Reflektivität, nahe der eines schwarzen Strahlers ist aus diesem Grunde als Trägermaterial für die Katalysatorbibliothek besonders geeignet. Dies läßt sich auch durch eine geeignete Beschichtung erzielen. Auch die Innenwände des Reaktors sollten möglichst wenig infrarotstrahlung reflektieren. Dies kann man beispielsweise durch entsprechende Antireflexionsbeschichtungen erzielen. Außerdem sollte das Trägermaterial für die Katalysatorbibliothek eine möglichst geringe thermische Leitfähigkeit aufweisen, damit die an den Katalysatorpunkten während der katalytischen Reaktion entwickelte Wärme nicht zu schnell abgeleitet wird und eine möglichst große Temperaturerhöhung erzielt werden kann.

Wellenlängenbereiche, in denen die gasförmigen Reaktanden und Produkte besonders starke Infrarotaktivität zeigen, sind für die IR-thermographische Temperaturmessung ungünstig, da hier verstärkt störende Effekte durch Absorption und Emisssion der Gase auftreten. Solche Wellenlängenbereiche können mit Hilfe eines wellenlängenspezifischen Infrarotfilters ausgeblendet werden. Für gasförmige Kohlenwasserstoffe haben wir gefunden, daß es zweckmäßig ist, mit einem solchen Filter die besonders intensiven CH-Schwingungen auszublenden.

Die IR-Thermographie wie hier beschrieben, eignet sich auch zur Erkennung der katalytischen Aktivität von enantioselektiven Homogenkatalysatoren und Enzymen. Durch Verwendung von enantiomerenreinen Reaktanden oder Racematen lassen sich sowohl die relative katalytische Aktivität verschiedener Katalysatoren als auch deren Enantioselektivität mittels der IR-Thermographie erkennen. Als Reaktionen wurden die enantioselektive Acylierung von 1-Phenylethanol mit Lipase [M.T. Reetz, A. Zonta, J. Simpelkamp, Angew. Chem. 107 (1995) 373-376] und die Hydrolyse von chiralen Epoxiden mit Mn, Co und Cr-Salenkomplexen [M. Tokunaga, J.F. Larrow, F. Kakiuchi, E.N. Jacobsen, Science 277 (1997) 936-9389 in einer kleinen kombinatorischen Bibliothek von 9 Reaktionslösungen untersucht. Mit Hilfe der IR-thermographischen Differenzbilder konnte sowohl die relative Aktivität der Katalysatoren als auch deren Enantioselektivität gleichzeitig sichtbar gemacht werden.

Das Verfahren ist natürlich auf viele andere Reaktionstypen, wie selektive Hydrierungen, selektive Oxidationen, Veresterungen, pericyclische Reaktionen, Halogenierungen, Dehalogenierungen, Hydrogenolysen, Hydratisierungen, Dehydratisierungen, Kondensationen, enantioselektive Reaktionen, Polymerisationsreaktionen, Polykondensationsreaktionen, oxidative Kupplungen, und selektive Oxidationen von Olefinen und Alkanen, insbesondere mit Luft, H₂O₂ oder Ozon unter selektiver Bildung von Epoxiden, Ketonen, Aldehyden, Alkoholen, Carbonsäuren oder Anhydriden anwendbar. Auch Reaktionswärmen solcher Reaktionen in flüssiger Phase können mit Hilfe einer IR-Kamera sehr einfach und effektiv sichtbar gemacht werden (Maier, Holzwarth, Anmeldung DE 19971057754).

### Beispiele:

### Aufbau der Kamera, Korrektur des Detektors und Temperaturkalibration:

In den folgenden Beispielen wurde eine Infrarot-Kamera der Firma AIM des Typs AEGAIS verwendet mit einem PtSi- (Platin-Silizium) Detektor mit 256 mal 256 Bildpunkten wie nachfolgend beschrieben eingesetzt. Die Kamera war an einen Computer angeschlossen. Die Software (Version 1.40 vom 4.7.97) erlaubte, den Hintergrund so abzuziehen, daß an jedem Bildpunkt nur eine Temperaturerhöhung relativ zur Ausgangstemperatur angezeigt wird.

Direkt vor dem Eintrittsfenster des Detektors wurde ein 3.6 µm cut-on Infrarotfilter angebracht, der für Infrarotstrahlung mit Wellenlängen kürzer als 3.6 µm undurchlässig ist. Die Inhomogenität des Detektors wurde durch eine Zweipunktkorrektur korrigiert. Dazu wurden IR-Aufnahmen der Bibliothek 5°C unterhalb und oberhalb der Reaktionstemperatur (Hydrierung: 100°C, Oxidation: 350°C, Lipasenkatalyse: 30°C, Metall-Salen-Katalyse: 27 °C) aufgenommen. Nach Erreichen der Reaktionstemperatur vor dem Start der Reaktion wurde eine weitere IR-Aufnahme der Katalysatorbibliothek gemacht. Diese wurde dann von allen folgenden IR-Aufnahmen subtrahiert (Offset), so daß nur Temperaturveränderungen infolge katalytischer Aktivität an den Katalysatorpunkten durch entsprechende Farbveränderungen sichtbar wurden. Die Temperaturkalibration erfolgte durch Einlesen der Katalysatorbibliothek im Reaktor bei 6 Temperaturen und einem anschließenden Fit der einzelnen Pixel mit Hilfe eines quadratischen Polynoms, eine in der Kamera-Software vorgesehene Funktion.

### Beispiel 1:

### Kombinatorisches Testverfahren zum Screenen der katalytischen Aktivität von Materialien auf einer Bibliothek

### Konstruktion des Reaktors:

Bei der Konstruktion des Reaktors wurde besonderes Augenmerk darauf gerichtet, eine möglichst homogene Temperaturverteilung innerhalb des Reaktors zu erzielen. Der Reaktor besteht im wesentlichen aus zwei Teilen, dem Reaktorkopf mit einem infrarotdurchlässigen Bariumfluorid-Fenster zur Beobachtung der Katalysatorbibliothek und dem Reaktorblock der aus massivem Stahl besteht. Der Reaktorkopf mit dem infrarotdurchlässigen Bariumfluoridfenster ist um 10°C abgewinkelt. Die Heizelemente befinden sich im unteren Teil des Reaktors. Sie sind so angeordnet, daß der gesamte Reaktorblock und der Reaktorkopf möglichst homogen aufgeheizt werden. Die Gaszuleitungen wurden von unten durch den Reaktorblock in die Reaktionskammer mit der Katalysatorbibliothek geführt, um die gasförmigen Edukte vor der Reaktion an den Katalysatorpunkten auf die gleich Temperatur wie die Katalysatorbibliothek vorzuheizen. Das Gasgemisch wurde durch viele kleine Löcher zugeleitet, die um die kreisförmige Katalysatorbibliothek herum angeordnet waren. Dadurch sollte eine möglichst homogene Verteilung der Gase in der Kammer erzielt werden.

### Herstellung der Silica-Sole:

Silica- und Titania-Sole wurden herstellt und mit einer Mikroliterpipette in entsprechende Bohrungen auf einer Schiefer-Bibliotheks-Platte einpipettiert. Nachdem das Lösungsmittel verdunstet war, wurde die gesamte Bibliothek kalziniert. Die Platte wurde in einen speziell für die Beobachtung mit der Infrarot-Kamera (s.o.) ausgelegten Reaktor eingebracht. Anschließend wurden die Katalysatoren auf der Platte durch dreistündiges Tempern bei 300°C im Wasserstoffstrom aktiviert. Danach wurden Versuche zur Hydrierung von 1-Hexin bei 100°C durchgeführt. Als letztes wurden die Versuche zur Oxidation von Isooctan und Toluol mit synthetischer Luft bei 350°C durchgeführt.

Silica-Sole wurden nach der Standard-Vorschrift von Klein et al. [S. Klein, S. Thorimbert, W.F. Maier, J. Catal. 163 (1996) 476-488] hergestellt. Tetraethoxyorthosilikat diente als Silica-Vorstufe. Die folgenden Verbindungen wurden als Vorstufen für die weiteren Elemente im Sol gelöst: PdCl₂, Na₂PtCl₆, IrCl₄ ×H₂O, RuCl₃ ×H₂O, CoCl₂ 6H₂O, Fe(acac)₃ Mn(acac)₃, (iPrO)₃VO, CrCl₃ 6H₂O, Cu(acac)₂ , Ni(acac)₂ ZnCl₂, Pd(acac)₂, RhCl₃ 3H₂O.

### Herstellung der Titania-Sole:

Unter ständigem Rühren wurde 1 ml Titanisopropoxid (3.36 mmol) in 3.33 ml trockenem Ethanol gelöst. Nach 30 Minuten Rühren wurden 8.33 ml 8N HCl zugegeben. Nach weiteren 5 Minuten wurden im Verlauf von 20 min 46,7 ml 12 N HCl langsam zugegeben. Danach wurden 833 ml Ethanol zugegeben. Zuletzt wurden 833 ml einer ethanolischen Lösung der Metallverbindung zugegeben.

### Herstellung der Katalysatorbibliothek:

Als Material für die Katalysatorbibliothek wurde Schiefer aufgrund seiner geringen thermischen Leitfähigkeit und seiner geringen Reflektivität für Infrarotstrahlung ausgewählt. Die kreisförmige Bibliotheksplatte (Durchmesser 5 cm) hatte 69 Löcher mit einem Durchmesser von 1.5 mm und einer Tiefe von 0.6 mm.

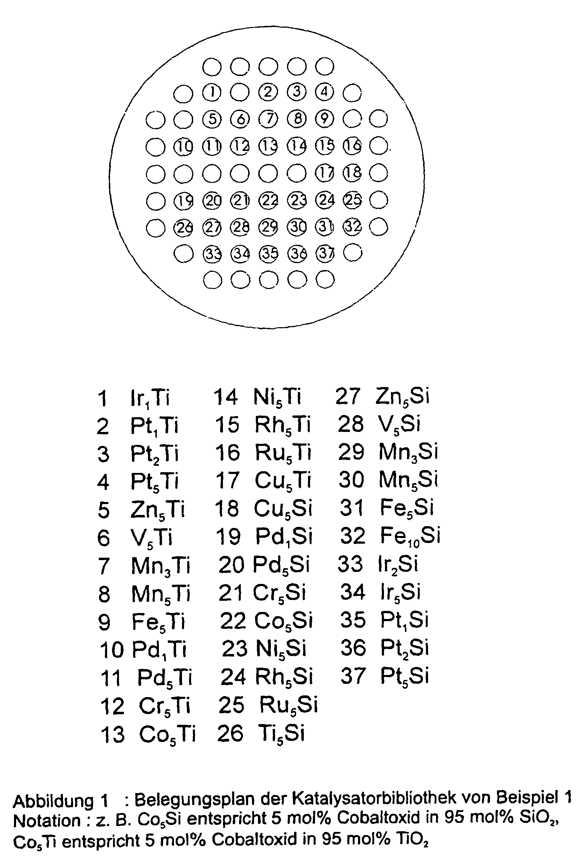

Die Katalysatorbibliothek wurde hergestellt, indem Mikroliter-Mengen der Silica- und Titania-Sole in dafür vorgesehenen Bohrungen auf der Schiefer Platte einpipettiert wurden. Um vergleichbare Mengen Katalysatormaterial zu bekommen, wurden im Falle der Silica-Sole 1.5 µl (entsprechend 192 µg Silica) und im Falle der Titania-Sole 5 µl (entsprechend 182 µg Titania) einpipettiert. Nach dem Verdunsten des Lösungsmittels wurde die Platte wie in Beispiel 1 kalziniert (Temperaturprogramm: 1. Raumtemperatur bis 65 °C mit 1°C/min, 2. Temperatur 30 min bei 65 °C halten, 3. 65 °C bis 250°C mit 1 °C/min, 4. Temperatur 3h bei 250 °C halten, 5. auf Raumtemperatur abkühlen). Abbildung 1 zeigt die Anordnung und chemischen Zusammensetzungen der Bibliothek.

### Hydrierung von 1-Hexin:

Die Hydrierung von 1-Hexin wurde durchgeführt, indem bei einer Temperatur von 100 °C Wasserstoff mit einer Strömungsgeschwindigkeit von 20 ml/min durch den Reaktor geleitet wurde. In den Gasstrom wurde 1-Hexin verdunstet. Die Konzentration des 1-Hexins in der Gasphase betrug 0.2478 g/l.

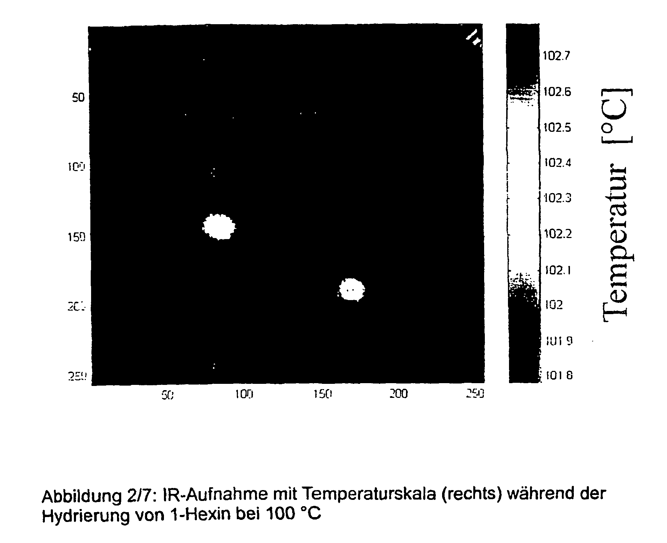

Eine Infrarotaufnahme der Katalysatorbibliothek während der Reaktion zeigt Abb. 2., die Belegung der Bibliothek ist in Abb. 1 zu sehen. Besondere Aktivität zeigen die Katalysatormaterialien Pd₅Si, Pd₁Si, Pt₅Si und PtₜSi.

### Oxidation von Isooctan mit synthetischer Luft:

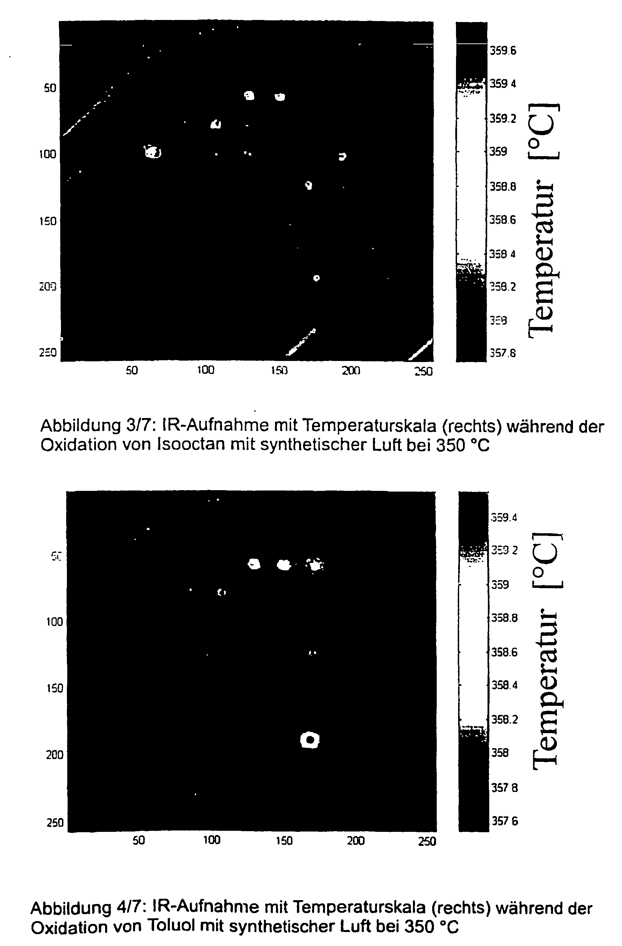

Die Oxidation von Isooctan wurde durchgeführt, indem bei einer Temperatur von 350 °C synthetische Luft mit einer Strömungsgeschwindigkeit von 20 ml/min durch den Reaktor durchgeleitet wurde. In den Gasstrom wurde Isooctan verdunstet. Die Konzentration des Isooctans in der Gasphase betrug 0.2381 g/l. Eine Infrarotaufnahme der Katalysatorbibliothek während der Reaktion zeigt Abb. 3. Besondere Aktivität zeigen die Katalysatormaterialien Pt₂Ti, Pt,Ti, V₅Ti, Pd,Ti, Ru₅Ti, Cu₅Ti.

### Oxidation von Toluol mit synthetischer Luft:

Die Oxidation von Toluol wurde durchgeführt indem bei einer Temperatur von 350 °C synthetische Luft mit einer Strömungsgeschwindigkeit von 20 ml/min durch den Reaktor geleitet wurde. In den Gasstrom wurde Toluol verdunstet. Die Konzentration des Toluols in der Gasphase betrug 0.1489 g/l. Eine Infrarotaufnahme der Katalysatorbibliothek während der Reaktion zeigt Abb. 4. Besondere Aktivität zeigen die Katalysatormaterialien Pt₂Ti. Pt,Ti, V₅Ti, Cu₅Ti, Pt₅Ti, Pt₅Si.

### Beispiel 2:

### Kombinatorisches Testverfahren für gleichzeitiges Aktivitäts- und Enantioselektivitäts-Screening homogener Katalysatoren

Katalytische Reaktionen in der Flüssigphase wurden in den Vertiefungen einer modifizierten Mikrotiter-Platte durchgeführt. Diese Platte war auf einem thermostatisierbaren Eppendorf-Schüttler angebracht. Durch schnelles Schütteln der Mikrotiterplatte war es möglich, eine homogene Durchmischung der Reaktionslösungen in den einzelnen Vertiefungen der Platte zu erreichen und die Lösungen auf bestimmte vorgegebene Temperaturen zu thermostatisieren. Der Abgleich der IR-Kamera erfolgte wie im vorhergehenden Beispiel beschrieben. Während der Reaktion wurde ständig geschüttelt. Für die Messung mit der Infrarotkamera wurde der Schüttler kurz angehalten. Im Experiment wurde eine Bibliothek aus 9 Reaktionen gleichzeitig beobachtet.

### Lipasenkatalysierte enantioselektive Acylierung von 1-Phenylethanol mit Vinylacetat:

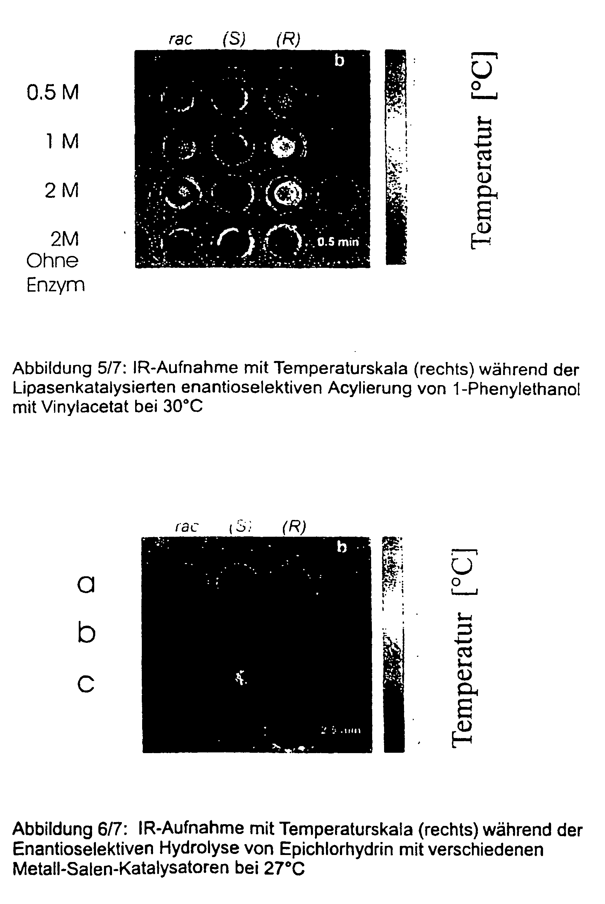

Jeweils 100 µl einer Lösung des Phenylethanols als S-Enantiomer, R-Enantiomer oder Racemat in Toluol wurden in die Vertiefungen der Mikrotiterplatte einpipettiert. Diesen Lösungen wurden 100 µl einer Lösung des Vinlylacetats in Toluol in äquimolarem Verhältnis zugesetzt. Es wurden Konzentrationen von jeweils 0.5 M, 1 M oder 2M verwendet. Nun wurden Infrarotaufnahmen der Platte mit den Lösungen für die Temperaturkalibration, die Zweipunkt-Korrektur des Detektors sowie den Offset gemacht. Danach wurde die Reaktion durch Zusatz von 5 mg der immobilisierten Lipase (candida antarctica, Novo SP 435) bei 30 °C gestartet und zu verschiedenen Zeitpunkten während der Reaktion Infrarot-Bilder der Platte mit den Lösungen aufgenommen. Abb. 5 zeigt, daß die Wärmeentwicklung beim Racemat (linke Spalte) geringer ist als beim R-Enantiomer des 1-Phenylethanols (rechte Spalte), während das S-Enantiomere (mittlere Spalte) vom Enzym nicht umgesetzt wird.

### Enantioselektive Hydrolyse von Epichlorhydrin mit Mangan-, Chrom- und Cobalt-Salen-Katalysatoren:

Jeweils dreimal 300 µl einer Lösung, die 600 µmol der Katalysatoren (S,S)-M-Salen (a: M = Mn; b: M = Cr; c: M = Co) in Toluol enthält, wurden in die Vertiefungen der Mikroliterplatte einpipettiert. Danach wurden 78.4 µl (1mmol) des Epichlorhydrins als Racemat, S- oder R-Enantiomer zugesetzt. Nun wurden Infrarotaufnahmen der Platte mit den Lösungen für die Temperaturkalibration, die Zweipunkt-Korrektur des Detektors sowie den Offset gemacht. Danach wurde die Reaktion durch Zusatz von 9.9 µl (0.55 mmol) Wasser bei 27 °C gestartet und zu verschiedenen Zeitpunkten während der Reaktion Infrarot-Bilder der Platte mit den Lösungen aufgenommen. Abb. 6 zeigt, daß der Mangan-Katalysator (a) nicht aktiv ist, der Chromkatalysator (b) nur mit dem S-Epichlorhydrin eine erkennbar Reaktion zeigt, während der Cobalt-Katalysator (c) am aktivsten ist, wobei das S-Enantiomer besser reagiert als das Racemat. Keiner der Katalysatoren zeigt eine erkennbare Reaktion mit dem R-Enantiomer.

### Hydrolyse verschiedener Substrate mit einem Cobalt-Salen-Katalysator:

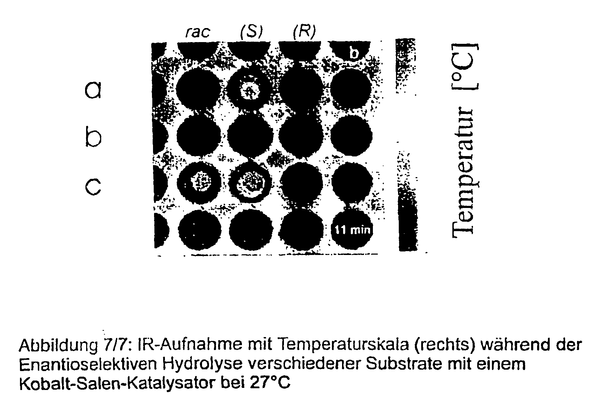

In 9 Vertiefungen der Mikroliterplatte wurden jeweils 100 µl einer Lösung, die 2 µmol des Katalysators (S,S)-Co-Salen in Toluol enthält, einpipettiert. Danach wurden Lösungen der Epoxide d-f als Racemat, S- oder R-Enantiomer zugesetzt (d-f = Epoxide der Formel RCHCH₂O, d: R=CH2OCH₂Ph, e: R = Ph, f: R= CH₂Cl). Die Lösungen enthielten die Epoxide in einer Konzentration von 3.85 mol/l. Vor dem Start der Reaktion durch Wasserzugabe bei 27 °C wurden wiederum Infrarotaufnahmen der Platte mit den Lösungen für die Temperaturkalibration, die Zweipunkt-Korrektur des Detektors sowie den Offset gemacht. Nach der Wasserzugabe wurden zu verschiedenen Zeitpunkten während der Reaktion Infrarot-Bilder der Platte mit den Lösungen aufgenommen. Abb. 7 zeigt, daß der Co-Katalysator selektiv mit den S-Enantiomeren der Epoxide a und b reagiert.

## Patentansprüche

1. Verfahren zur vergleichenden Bestimmung der von, mit Hilfe von Katalysatoren durchgeführten, chemischen Reaktionen verursachten Wärmetönung, wobei mit Hilfe einer IR-Kamera das Differenzbild registriert wird, das einer Subtraktion der nach Erreichen der Reaktionstemperatur aber vor Ablauf der chemischen Reaktion registrierten IR-Emission von der während der Durchführung der chemischen Reaktion registrierten IR-Emission entspricht, und wobei die Katalysatoren als Katalysatorbibliothek über die Fläche einer Bibliotheksplatte angeordnet sind, **dadurch gekennzeichnet, dass** die Bibliotheksplatte aus Schiefer besteht.

2. Verfahren nach Anspruch 1, wobei als chemische oder physikalische Prozesse Sorptionsprozesse, Phasenumwandlungen oder Stoffumwandlungen an bzw. von Materialien betrachtet werden, die auf der Fläche einer Bibliotheksplatte angeordnet sind.

3. Verfahren nach Anspruch 1 oder 2, wobei die Katalysatorbibliotheken aus Katalysatorkomponenten in Form von Metalloxiden und/oder Metallmischoxiden bestehen, deren Vorstufen als wässrige oder alkoholische Lösungen von Silizium- oder Metallverbindungen in Form ihrer Alkoxyderivate, gemischter Alkoxyderivate, ihrer Alkoxyoxo- oder Acetylacetonatderivate oder in Form ihrer Halogenide oder Carboxylate über die Fläche der Bibliotheksplatte, angeordnet werden, mit anschließendem Trocknen und Kalzinieren.

4. Verfahren nach Anspruch 3, wobei es sich bei den Katalysatorkomponenten um Carbide, Nitride oder Zeolite handelt.

5. Verfahren nach Ansprüchen 1 bis 4, wobei der Teil der Oberfläche der Bibliotheksplatte, der nicht mit Katalysatoren bzw. Materialien belegt ist, mit einem nicht benetzenden Film beschichtet ist.

6. Verfahren nach Anspruch 1, wobei die Bibliotheksplatte Reaktionsräume enthält, in denen sich flüssige Reaktionslösungen mit homogenen Katalysatoren befinden.

7. Verfahren nach Anspruch 6, wobei als Katalysatoren Enzyme oder lösliche metallorganische Verbindungen eingesetzt werden.

8. Verfahren nach Anspruch 6 oder 7, wobei die Selektivität oder die Enantioselektivität von katalysierten Reaktionen auf Bibliotheken bestimmt wird.

9. Verfahren nach einem der vorstehenden Ansprüche, wobei sich die Katalysatoren unter Reaktionsbedingungen in einem Reaktor befinden und von der extern angeordneten IR-Kamera durch ein IR-durchlässiges Fenster aufgenommen werden.

10. Verfahren nach Ansprüchen 1 bis 9, wobei die IR-Emission durch ein wellenlängenspezifisches IR-Filter registriert wird.

11. Verfahren nach Anspruch 10, wobei Oberflächen des Reaktorinnenraumes mit einem Lack beschichtet sind, der eine IR-Reflektivität aufweist, welche der IR-Reflektivität von Schiefer entspricht.

## Claims

1. Process for the comparative determination of the reaction heat that is caused by chemical reactions which are carried out by means of catalysts, wherein by means of an IR camera the difference image is registered that corresponds to a subtraction of an IR emission which is registered after the achievement of the reaction temperature, however, before the development of the chemical reaction, from the IR emission which is registered during the realization of the chemical reaction, and wherein the catalysts are arranged as a catalyst library across the surface of a library plate, **characterized in that** the library plate consists of slate.

2. Process as claimed in claim 1, wherein as chemical or physical processes sorption processes, phase transformations or material transformations at materials respectively of materials are observed which are arranged on the surface of a library plate.

3. Process as claimed in claim 1 or 2, wherein the catalyst libraries consist of catalyst components in the form of metal oxides and/or mixed metal oxides, the precursors thereof being arranged across the surface of the library plate as aqueous or alcoholic solutions of silicon or metal compounds in the form of its alkoxy derivatives, mixed alkoxy derivatives, alkoxy oxoacetonate derivatives or acetyl acetonate derivatives thereof, or in the form of halides or carboxylates thereof, with subsequent drying and calcining.

4. Process as claimed in claim 3, wherein the catalyst components are carbides, nitrides or zeolites.

5. Process as claimed in claims 1 to 4, wherein the portion of the surface of the library plate which is not covered with catalysts respectively materials is coated with a non-wetting film.

6. Process as claimed in claim 1, wherein the library plate contains reaction cavities which contain liquid reaction solutions having homogeneous catalysts.

7. Process as claimed in claim 6, wherein as catalysts enzymes or soluble metal organic compounds are employed.

8. Process as claimed in claim 6 or 7, wherein the selectivity or the enantioselectivity of catalyzed reactions on libraries is determined.

9. Process as claimed in any one of the preceding claims, wherein the catalysts are in a reactor under reaction conditions and are recorded by the externally arranged IR camera through an IR-permeable window.

10. Process as claimed in claims 1 to 9, wherein the IR emission is registered by an IR filter that is specific for wavelengths.

11. Process as claimed in claim 10, wherein the surfaces of the interior of the reactor are coated with a lacquer having an IR reflectivity that corresponds to the IR reflectivity of slate.

## Revendications

1. Procédé pour la détermination comparative de la chaleur de réaction provoquée par des réactions chimiques réalisées à l'aide de catalyseurs, dans lequel on enregistre à l'aide d'une caméra infrarouge l'image différentielle qui correspond à une soustraction de l'émission infrarouge enregistrée après l'obtention de la température de réaction mais avant le déroulement de la réaction chimique, de l'émission infrarouge enregistrée pendant l'exécution de la réaction chimique, et dans lequel les catalyseurs sont agencés comme bibliothèque de catalyseurs sur la surface d'une plaque multipuits, **caractérisé en ce que** la plaque multipuits est constituée de schiste.

2. Procédé selon la revendication 1, dans lequel des processus de sorption, des transitions de phases ou des transformations de substances sont observées comme processus chimiques ou physiques sur ou par des matériaux qui sont agencés sur la surface d'une plaque multipuits.

3. Procédé selon la revendication 1 ou 2, dans lequel les bibliothèques de catalyseurs existent sous forme d'oxydes de métaux et/ou d'oxydes mixtes de métaux dont les précurseurs sont agencés sur la surface de la plaque multipuits comme solutions aqueuses ou alcoolisées de liaisons de silicium ou métalliques sous forme de leurs dérivés alcoxyles, de leurs dérivés alcoxyles mixtes, de leurs dérivés oxo-alcoxyles ou d'acétonate acétylique, ou sous forme de leurs haloïdes ou carboxylates, avec dessiccation et calcination postérieure.

4. Procédé selon la revendication 3, dans lequel il s'agit, avec les composants catalyseurs, de carbure, de nitrures ou de zéolites.

5. Procédé selon les revendications 1 à 4, dans lequel la partie de la surface de la plaque multipuits, laquelle n'est pas occupée par des catalyseurs ou des matériaux, est enduite d'un film qui ne mouille pas.

6. Procédé selon la revendication 1, dans lequel la plaque multipuits contient des compartiments de réaction dans lesquels se trouvent des solutions réactives liquides comprenant des catalyseurs homogènes.

7. Procédé selon la revendication 6, dans lequel les catalyseurs sont des enzymes ou des liaisons organiques métalliques solubles.

8. Procédé selon la revendication 6 ou 7, dans lequel on détermine la sélectivité ou l'énantiosélectivité des réactions catalysées sur des bibliothèques.

9. Procédé selon l'une des revendications précédentes, dans lequel les catalyseurs se trouvent dans un réacteur dans des conditions de réaction et sont enregistrés par la caméra infrarouge agencée à l'extérieur à travers une fenêtre perméable aux infrarouges.

10. Procédé selon l'une des revendications 1 à 9, dans lequel l'émission infrarouge est enregistrée par un filtre infrarouge spécifique à la longueur d'onde.

11. Procédé selon la revendication 10, dans lequel des surfaces du compartiment intérieur du réacteur sont enduites d'un vernis présentant une réflectivité aux infrarouges, laquelle correspond à la réflectivité aux infrarouges du schiste.
